# EUROPEAN PATENT SPECIFICATION

(11) **EP 0 902 060 B1**
(45) Date of publication and mention of the grant of the patent: **06.05.2004**
(21) Application number: 97118202.7
(22) Date of filing: 20.10.1997
(51) Int. Cl.: C08L 101/00, C08L 69/00, C08L 25/06

(54) **Flame retardant resin composition**
Flammhemmende Polymermischung
Composition de résines ignifugée

(30) Priority: 10.09.1997 JP 24497197
(43) Date of publication of application: 17.03.1999
(73) Proprietor: NEC CORPORATION, Tokyo (JP)
(72) Inventor: Serizawa, Shin, Minato-ku, Tokyo (JP); Iji, Masatoshi, Minato-ku, Tokyo (JP)
(74) Representative: Glawe, Delfs, Moll & Partner

(56) References cited:
- EP-A- 0 340 580
- EP-A- 0 707 045
- US-A- 4 265 801

## Description

The present invention relates to a flame retardant resin composition, and more particularly to a silicone resin acting as a flame retarder which provides a flame retardancy to an aromatic polycarbonate resin.

Flame retardant resin compositions have been widely used for electric and electronic components and devices, building materials, automobile parts, daily necessities and the like. In general, such base material resin compositions are added with an organic halogen compound or added with both an organic halogen compound and antimony trioxide so that the base material resin compositions are provided with the flame retardancy. Such the flame retardant resin material has a disadvantage that burning this flame retardant resin material causes generation of harmful halogen gases.

It has been known by one skilled in the art that in order to avoid the above disadvantage it is effective to add the base material resin composition with silicone thereby to provide the flame retardancy to the base material resin composition without generation harmful halogen gases when burning.

Silicone (organopolysiloxane) comprises at least any of the following four units (M-unit, D-unit, T-unit and Q-unit). Silicone resin in general includes at least any of T-unit and Q-unit.

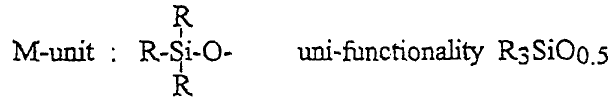

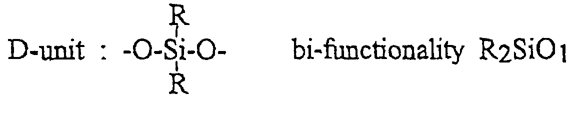

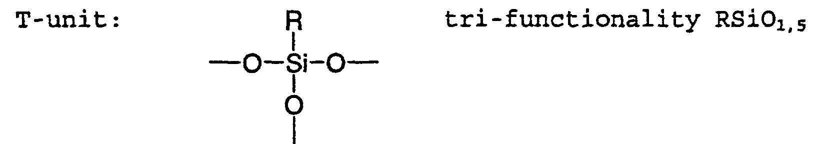

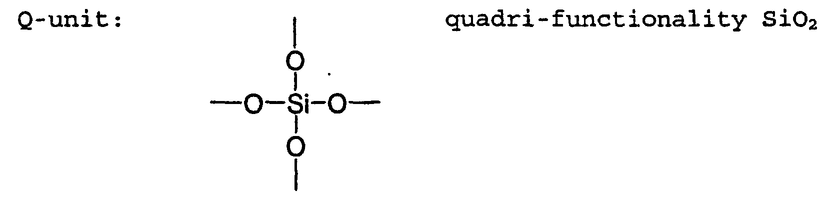

EP-A-0707045 describes a flame retardant resin containing a thermoplastic resin containing a polycarbonate and a grafted polymer. A silicone resin and specific phosphorus compounds are used in combination as flame retardants.

In the Japanese laid-open patent publication No. 1-318069, it is disclosed that a thermoplastic material is provided with flame retardancy by powdered polymer mixture which comprises a thermoplastic polymer and a silicone resin (RₓSi(OR')_{y}O_{(4-x-y)/2}) consisting of all of the above four units and also having either alkoxyl group or hydroxyl group.

In the Japanese laid-open patent publication No. 2-150436, it is disclosed that a thermoplastic material is provided with a flame retardancy by a mixture of the normal silicone powder such as dimethyl-silicone, metal hydroxide and zinc compound.

In the Japanese patent publication No. 62-60421, it is disclosed that a thermoplastic non-silicone polymer is provided with flame retardancy by polysiloxane containing 80 % by weight or more of T-unit represented by RSiO_{1.5}. Particularly, it is preferable for providing the flame retardant to the polymer component that the molecular weight of the polysiloxane resin is not less than 2000 and not more than 6000 and R in the formula comprises not more than 80mol% of phenyl group and the remaining percents of methyl group.

In the Japanese patent publication No. 3-48947, it is disclosed that a thermoplastic material is provided with a flame retardancy by a silicone resin, particularly a MQ silicone which comprises M-unit of R₃SiO_{0.5} and Q-unit of SiO₂, silicone and Group IIA metal salts.

In the Japanese laid-open patent publication No. 1-318069 or No. 2-150436, the use of normal silicone resin alone results in an insufficient flame retardancy, for which reason flame retarder such as halogen compounds, phosphorus compounds, metal hydroxide may be used and added.

The specific silicone resins disclosed in the Japanese patent publications Nos. 62-60421 and 3-48947 have to be added at a large amount for obtaining a sufficient flame retardancy.

In the Japanese patent application publication No. 62-60421, 10 to 300 parts by weight of silicone resin, preferably 20 to 100 parts by weight, are added to 100 parts by weight of non-silicone resin for achieving flame retardancy. However, the addition of such large amount of silicone resin results in remarkable deterioration of moldability and mechanical strength of the resin composition.

EP-A-0 707 045 discloses a thermoplastic flame-retardant moldable composition comprising at least 50 weight-% aromatic polycarbonate, 3 to 18 % grafted polymer, 0.5 to 5 % OH group-containing silicone resin and 3 to 18 % phosphoric ester. Due to the presence of phosphorous compounds this prior art flame retardant composition, when exposed to burning conditions, will develop phosphorus-containing gases which are harmful to health and to the environment.

It is an object of the present invention to provide a novel flame retardant resin composition comprising a silicone resin and an aromatic polycarbonate resin, which has a high flame retardancy, even if the amout of silicone resin is small, and which additionally has a high moldability and high mechanical strength and which does not develop harmful halogen and/or phosphorous gases in case of burning.

The aforementioned object of the invention is achieved by a flame retardant resin composition as defined in claim 1.

The above and other objects, features and advantageous of the present invention will become apparent from the following description.

Preferred examples of the present invention will be described in detail with reference to the accompanying drawings.

FIG. 1 is a graph illustrative of oxygen indexes of polycarbonate resins added with 4phr of silicone resin versus weight-average molecular weight of the silicone resin and amount of phenyl in the silicone resin.

FIG. 2 is a graph illustrative of oxygen indexes of polycarbonate resins added with 4phr of silicone resin versus T-unit to D-unit ratio of the silicone resin and amount of phenyl in the silicone resin.

The present invention provides a novel flame retardant resin composition which comprises a silicone resin having specific structure and weight-average molecular weight (Mw) and which is an aromatic polycarbonate resin. The silicone resin has R₂SiO_{1.0} units and RSiO_{1.5} units. The weight-average molecular weight of said silicone resin is not less than 10,000 and not more than 270,000. R is hydrocarbon group.

The above aromatic polycarbonate may have aromatic rings such as benzene ring, condensed benzene ring, non-benzene aromatic ring, complex aromatic ring. The following naphthalene ring is one example of the condensed benzene ring and the following pyrrole ring is one example of the complex aromatic ring. 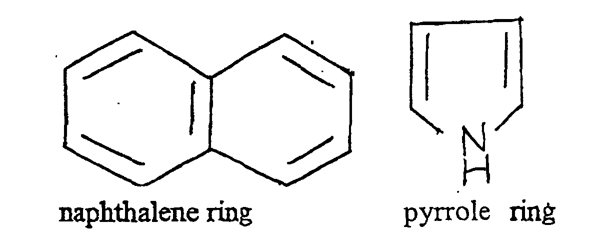 Aromatic polycarbonate resins are effective for providing flame retardancy.

As described above, the silicone resin has R₂SiO_{1.0} units referred to as D-unit and RSiO_{1.5} units referred to as T-unit. R is hydrocarbon group. The weight-average molecular weight of said silicone resin is not less than 10,000 and not more than 270,000. If the weight-average molecular weight of the silicone resin is less than 10000, then it is difficult to mix the silicone resin into the base material, resulting in insufficient flame retardancy effect. Further, the flame retardancy, specially a drip resistance of the resin composition against drip due to melting of the resin in combustion are decreased. If the weight-average molecular weight of the silicone resin exceeds 270,000, then an excessively high melting viscosity is obtained thereby lowering the mixability and moldability of the silicone resin with the non-silicone. Furthermore, the mobility of the silicone resin to the surface of the non-silicone resin is decreased in molding and combustion, whereby the formability of the flame retardant film with the silicone resin coating the non-silicone resin surface is lowered, resulting in a reduction of the flame retardancy effect.

A preferable mol ratio of the RSiO_{1.5} unit to the R₂SiO_{1.0} unit may be in the range of 0.5 to less than 7: If a ratio of RSiO_{1.5} unit to R₂SiO_{1.0} unit is less than 0.5, then the silicone resin tends to be in oil-state, thereby making it difficult to mix the silicone resin with the aromatic polycarbonate resin. As a result, the moldability is then decreased. Since further the heat resistance of the silicone resin itself is decreased, the flame retardant effect to the non-silicone resin is lowered whereby the drip is likely to appear. If a ratio of RSiO_{1.5} unit to the R₂SiO_{1.0} unit is not less than 7, then the dispersion of the silicone resin into the non-silicone resin is made poor by stereo hindrance, and the condensation between phenyl groups in the silicone resin of the flame resistant film is unlikely to appear. As a result, the flame retardancy effect to the non-silicone resin is decreased.

Preferably, R of the R₂SiO_{1.0} unit and the RSiO_{1.5} unit of the silicone resin comprises methyl group and phenyl group. More preferably, a mol ratio of the phenyl group to R of the silicone resin is in the range of not less than 40% to less than 80%, and the remaining R is methyl group. If the mol ratio of phenyl group to R is less than 40%, then solubility with the non-silicone resin including aromatic-ring is lowered, whereby the mixability is decreased. Since further the flame resistant of silicone itself is decreased, then the flame retardancy effect to the non-silicone resin is also decreased. If, however, the mol ratio of phenyl group to R is not less than 80 %, then the solubility with the non-silicone resin including aromatic-ring is excessively high, for which reason the mobility of the silicone resin to the non-silicone resin surface in molding and combustion of the non-silicone resin is decreased, thereby making it difficult to form the flame resistant film with the silicone resin on the non-silicone resin surface . As a result, the flame retardancy is lowered. Further, the condensation between phenyl groups in the silicone resin of the flame resistant film is prevented by the stereo-hindrance between phenyl groups in the silicone resin whereby the flame resistance of the film is decreased.

In the light of the flame resistance, it is preferable that the silicone resin comprises R₂SiO_{1.0} units (D-unit) and RSiO_{1.5} units (T-unit), in addition M-units which is terminated with R'₃SiO_{0.5}. R' in the formula is preferably a saturated hydrocarbon group and/or an aromatic hydrocarbon group, or a mixture of a saturated hydrocarbon group and/or an aromatic hydrocarbon group with hydroxyl group and/or alkoxyl group. It is more preferable that the hydroxyl group and/or alkoxyl group are less than 10% by mol ratio and the remaining is a methyl group and/or a phenyl group. If a mol ratio of the hydroxyl group and/or alkoxyl group is more than 10% to R, then a self condensation of the silicone resin is likely to occur in mixing with the non-silicone resin. As a result, the dispersion of the silicone resin into the non-silicone resin is decreased and the mobility of the silicone resin to the non-silicone resin surface in the molding and the combustion of the resin compositions is also decreased. The flame retardancy is therefore deteriorated.

It is preferable that the silicone resin is not less than 0.1 parts by weight and not more than 30 parts by weight to 100 parts by weight of the non-silicone resin. If the ratio of the silicone resin to the non-silicone resin is below that range, then the flame retardancy is lowered. If, however, the ratio of the silicone resin to the non-silicone resin is above that range, then the mechanical strength is weakened.

It is possible that a single kind of the silicone resin is mixed to a single kind of the aromatic polycarbonate resin.

It is also possible that a plurality of kinds of the silicone resin is mixed to a single kind of the aromatic polycarbonate resin.

It is also possible that a single kind of the silicone resin is mixed to a plurality of kinds of the aromatic polycarbonate resin.

It is also possible that a plurality of kinds of the silicone resin is mixed to a plurality of kinds of the aromatic polycarbonate resin.

It is further possible to optionally add a reinforcing agent into the flame retardant resin composition. The reinforcing agent may be antioxidant, neutralizer, ultraviolet ray absorbent, anti-static agent, pigment, dispersing agent, lubricant, thickener, filler, carbonization catalyst, anti-dripping agent and the others mixable in the resin composition.

Particularly, it is possible to improve the mixability with the aromatic polycarbonate resin including aromatic ring by use of the silicone resin together with inorganic fillers such as silica powder, calcium carbonate powder and talc powder, particularly with silica powder, In this case, the flame retardancy can be kept better. An amount of the inorganic filler to be added is preferably 0.1 times or more by weight ratio to the silicone resin.

The following descriptions will focus on a method of preparing the above flame retardant resin composition in accordance with the present invention.

As the non-silicone resin there are used aromatic polycarbonate resin. Further, the above aromatic polycarbonate resin may be a mixture of a plurality of the above resins.

The silicone resin may be prepared by the general method. Namely, in accordance with the weight-average molecular weight of the silicone resin composition and a ratio of the RSiO_{1.5} unit to the R₂SiO_{1.0} unit, diorgano-dichloro-silane and monoorgano-trichloro-silane are hydrolyzed and partially condensed to form a silicone resin. Further, the silicone resin is then reacted with triorgano-chloro-silane to terminate polymerization whereby the silicone resin is terminated with the bridging terminal group of R'₃SiO_{0.5} unit.

The property of the silicone resin depends upon the weight-average molecular weight, a ratio of the RSiO_{1.5} unit (T-unit) and the R₂SiO_{1.0} unit (D-unit) and a ratio of phenyl group to methyl group in R. The measurement of the molecular weight may be carried out by gel permeation chromatography (GPC) in the same manner as for the general polymers. The general formula of the silicone resin is as follows.

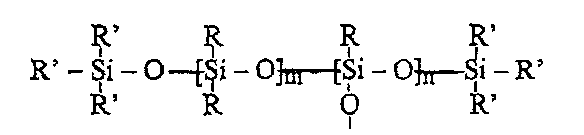

The weight-average molecular weight of the silicone resin is in the range of not less than 10,000 to not more than 270,000. The weight-average molecular weight of the silicone resin is controllable by controlling a time of reaction for preparing the silicone resin.

The ratio of RSiO_{1.5} unit (T-unit) to R₂SiO_{1.0} unit (D-unit) in the silicone resin is adjustable by the amounts in use of diorgano-dichloro-silane and monoorgano-trichloro-silane. Chlorine in the raw materials for the silicone resin is made into hydrochloric acid during the hydrolyzing reaction and is removed whereby no chlorine is included in the silicone resin. The preferable mol ratio of RSiO_{1.5} unit (T-unit) to R₂SiO_{1.0} unit (D-unit) is in the range of not less than 0.5 to less than 7.

A ratio of phenyl group to methyl group in R is adjustable by amounts in use of both methyl-silane raw materials such as dimethyl-dichloro-silane and monomethyl-trichloro-silane and phenyl silane raw materials such as diphenyl-dichloro-silane and monophenyl-trichloro-silane.

The non-silicone resin and the silicone resin are weighed and then mixed with each other to be formed using the same apparatus as when used to form usual plastic materials. Namely, a pre-mixing device such as ribbon blender and Henshell Mixer are used to pre-mix and disperse the non-silicone resin and the silicone resin, and then a mixing device such as Bumbury's roll and extruder is used to mix the non-silicone resin and the silicone resin to form the intended material. If the silicone resin is not solid in the ordinary temperature, then the silicone resin is directly mixable with the non-silicone resin using the mixing device.

After mixing the silicone resin to the aromatic polycarbonate resin, the mixture is defined by injection molding, extrusion molding, compression molding and vacuum molding thereby to obtain the flame retardant resin material.

After molding, in accordance with JIS K7201(burning examination of polymer material in oxygen index), the evaluation on flame retardancy is made. The burning examination of polymer material in oxygen index means a method for confirming whether or not a predetermined size sample peace is continuously burned for a time not less than 3 minutes and also determining a minimum flow rate of oxygen and a corresponding nitrogen flow rate both of which are necessary for continuing the flame length of not less than 50 mm. The confirmed minimum oxygen concentration (vol%) is oxygen index. As the oxygen index is high, then the flame retardancy is high.

As described above, the novel flame retardant resin composition comprises a silicone resin having specific structure and weight-average molecular weight and a non-silicone resin having aromatic-ring. The silicone resin has R₂SiO_{1.0} units (D-unit) and RSiO_{1.5} units (T-unit). The weight-average molecular weight of the silicone resin is in the range of not less than 10,000 to not more than 270,000. R is hydrocarbon group. The novel flame retardant resin composition in accordance with the present invention has a high flame retardancy with addition of a small amount of silicone resin without, however, generation of harmful halogen gases when burning this flame retardant resin composition.

### Example 1 :

Thirty seven kinds of silicone resins "1"-"37" were synthesized by varying the weight-average molecular weight of the silicone resin and the ratio of RSiO_{1.5} unit to R₂SiO_{1.0} unit as well as the ratio of phenyl group to methyl group in the hydrocarbon group R. R is hydrocarbon group. The following table 1 shows the weight-average molecular weight of the silicone resin and the ratio of RSiO_{1.5} unit to R₂SiO_{1.0} unit as well as the ratio of phenyl group to methyl group in the hydrocarbon group R for every silicone resins " 1"-"37". The silicone resins on Table 1 are terminated with excessive amount of trimethyl-chloro-silane.

**TABLE 1**

| Resin | Molecular Weight | RSiO_{1.5}-To-R₂SiO_{1.0} Ratio | Phenyl-To-Methyl Ratio |
|---|---|---|---|
| "1" | 5,000 | 1:0 | 70:30 |
| "2" | 6,000 | 1:1 | 25:75 |
| "3" | 8,000 | 0.4:1 | 70:30 |
| "4" | 12,000 | 1:0 | 0:100 |
| "5" | 40,000 | 0:1 | 40:60 |
| "6" | 12,000 | 0.4:1 | 15:85 |
| "7" | 25,000 | 7.5:1 | 85:15 |
| "8" | 50,000 | 7.5:1 | 85:15 |
| "9" | 12,000 | 0.5:1 | 15:85 |
| "10" | 50,000 | 6.5:1 | 85:15 |
| "11" | 12,000 | 0.5:1 | 50:50 |
| "12" | 40,000 | 1:1 | 40:60 |
| "13" | 50,000 | 3:1 | 75:25 |
| "14" | 300,000 | 3:1 | 60:40 |
| "15" | 4,000 | 4:1 | 60:40 |
| "16" | 8,000 | 4:1 | 35:65 |
| "17" | 8,000 | 4:1 | 60:40 |
| "18" | 8,000 | 4:1 | 85:15 |
| "19" | 12,000 | 4:1 | 60:40 |
| "20" | 40,000 | 4:1 | 25:75 |
| "21" | 40,000 | 4:1 | 35:65 |
| "22" | 40,000 | 4:1 | 45:55 |
| "23" | 40,000 | 4:1 | 60:40 |
| "24" | 40,000 | 4:1 | 75:25 |
| "25" | 40,000 | 4:1 | 85:15 |
| "26" | 40,000 | 4:1 | 100:0 |
| "27" | 270,000 | 4:1 | 60:40 |
| "28" | 300,000 | 4:1 | 35:65 |
| "29" | 300,000 | 4:1 | 60:40 |
| "30" | 300,000 | 4:1 | 85:15 |
| "31" | 500,000 | 4:1 | 60:40 |
| "32" | 40,000 | 0.4:1 | 35:65 |
| "33" | 40,000 | 0.4:1 | 60:40 |
| "34" | 40,000 | 0.4:1 | 85:15 |
| "35" | 40,000 | 7.5:1 | 35:65 |
| "36" | 40,000 | 7.5:1 | 60:40 |
| "37" | 40,000 | 7.5:1 | 85:15 |

where the ratio of RSiO_{1.5} unit to R₂SiO_{1.0} unit as well as the ratio of phenyl group to methyl group are molar ratios.

The novel flame retardant resin composition comprises a silicone resin having specific structure and weight-average molecular weight and a non-silicone resin having aromatic-ring. The silicone resin has R₂SiO_{1.0} units and RSiO_{1.5} units. The weight-average molecular weight of the silicone resin is in the range of not less than 10000 to not more than 270,000. R is hydrocarbon group, in particular methyl group and phenyl group. The silicone resins "6"-"13", "19"-"27", and "32"-"37" are the resin to be used in the novel flame retardant resin composition in the preferred examples according to the present invention. By contrast, the silicone resins "1"-"5", " 14"-"18", and "28"-"31" are the resin to be used in the flame retardant resin composition in the comparative examples. The silicone resin "14" is high in weight-average molecular weight so that the melting viscosity is too high to mix the silicone resin with the non-silicone resin, for example, polycarbonate resin at usual mixing temperatures as shown later.

As the polycarbonate resin, used was bis-phenol A-polycarbonate resin (Sumitomo Dow Co - Calibre 301-10). Furthermore, there were used alloys of bis-phenol A-polycarbonate resin and ABS (Sumitomo Dow Co - H-270, hereinafter referred to as PC/ABS), or polystyrene resin (Shinnitetsu Chemical Co. H-65). The silicone resin and the non-silicone resin were milled and mixed using an extruder mixer at a temperature of 280°C, preferably in the range of 270°Cto 290°C, when polycarbonate resin is used or at a temperature of 260°C, preferably in the range of 250°Cto 270°C, when PC/ABS is used and at a temperature of 220°C, preferably in the range of 210°Cto 230°C, when polystyrene resin is used.

In co-use of the above bis-phenol A-polycarbonate resin (Sumitomo Dow Co - Calibre 301-10) with either silica powder A (Denki Kagaku Co. FB-48 : 16 µm of averaged particle diameter) or silica powder B (Nippon Aerosil Co. AEROSIL130 : 16 nm of averaged particle diameter), the silicone resins (6, 9, 11) were mixed using the extruder. The mixing temperature was at 280°C.

After drying at 120°C for 3 hours, the mixed resin compositions were molded at a temperature of 270°C when the polycarbonate is used at a temperature of 240°C when PC/ABS alloy is used, and at a temperature of 200°C when the polystyrene is used.

The molded plate is processed to a sample piece of a length 150 mm, a width of 6.5 ± 0.5 mm so that in accordance with JIS K7201(burning examination of polymer material in oxygen index), the evaluation on flame retardancy is made to find oxygen index.

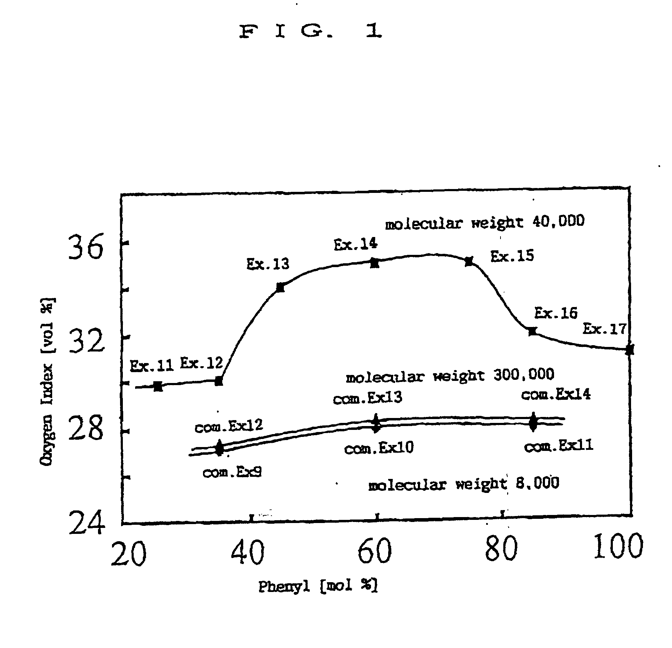

The following Tables 2-10 and FIGs. 1-2 show amounts of the silicone resin with reference to 100 parts by weight of the non-silicone resin and an oxygen index for every resin compositions.

The following Tables 11-12 show amounts of the silicone resin and silica powder with reference to 100 parts by weight of the non-silicone resin and mixability for every resin compositions.

The following Tables 2 and 3 show amounts of the silicone resins with reference to 100 parts by weight of the non-silicone resin and an oxygen index for various resin compositions in comparative example when no silicone resin is added or when the weight-average molecular weight is less than 10000 or when the silicone resin does not have RSiO_{1.5} unit or R₂SiO_{1.0} unit.

**TABLE 2**

| | Example 1 | Example 2 | Example 3 |
|---|---|---|---|
| Polycarbonate (non-silicone) | 100 | 100 | 100 |
| Silicone resin "6" | 4 | - | - |
| Silicone resin "7" | - | 4 | - |
| Silicone resin "8" | - | - | 4 |
| Evaluation (oxygen index) | 31 | 30 | 31 |
| (Unit :parts by weight) | | | |

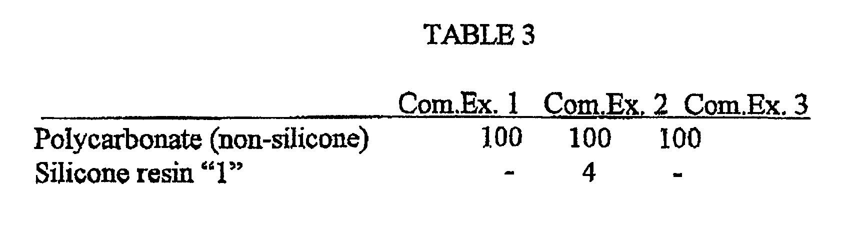

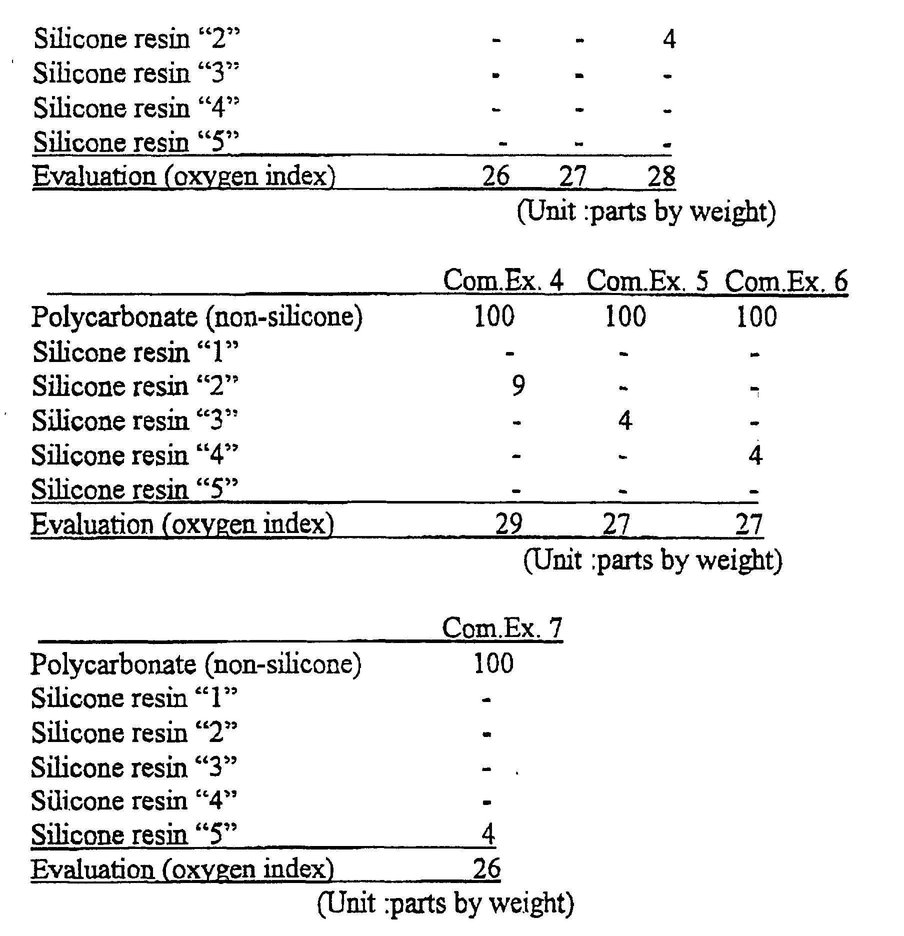

From Tables 2 and 3, it is understood that the polycarbonate resin compositions containing the silicone resins "6", "7", "8" in Examples 1, 2 and 3 are high in oxygen index than the polycarbonate resin compositions containing the silicone resins "1", "2", "3", "4", "5" in Comparative Examples 2-7 and also than the polycarbonate resin free of silicone resin in Comparative Example 1. The flame retardant resin compositions of Examples 1, 2 and 3 comprise a silicone resin and a non-silicone resin having aromatic-ring, wherein the silicone resin has R₂SiO_{1.0} units and RSiO_{1.5} units, and the weight-average molecular weight of the silicone resin is in the range of not less than 10000 to not more than 270,000, and R is hydrocarbon groups, in particular methyl group and phenyl group. The flame retardant resin compositions of Examples 1, 2 and 3 are higher in flame retardancy than Comparative Examples 1-7. The following Table 4 shows dependency of the oxygen index upon the ratio of RSiO_{1.5} unit to R₂SiO_{1.0} unit and the ratio of methyl group and phenyl group.

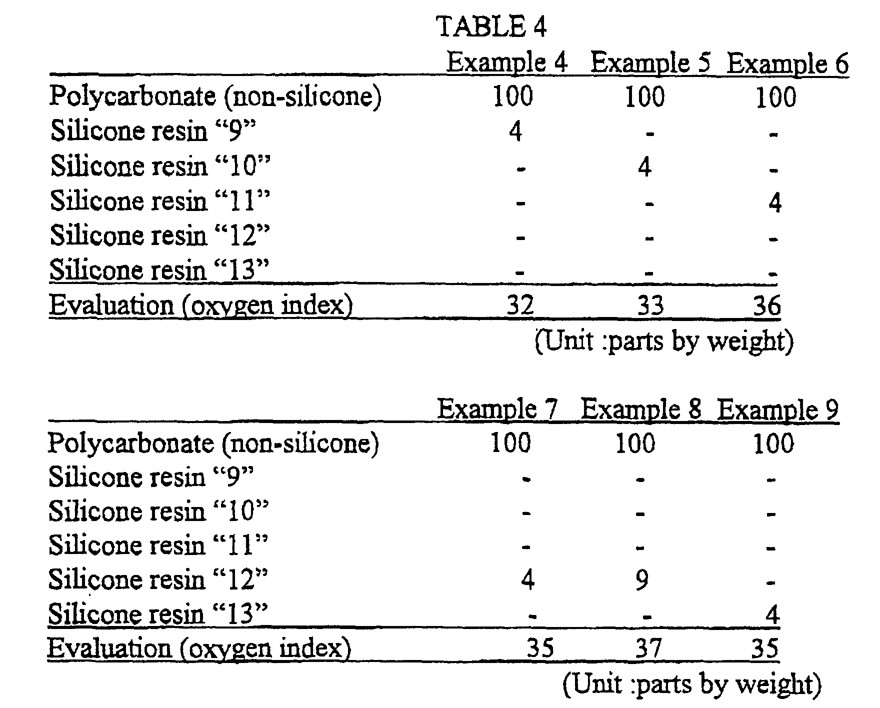

From Examples 4 and 5, it is understood that the polycarbonate resin compositions containing the silicone resin "9" or "10" in Examples 4 and 5, where the mol ratio of T-units to D-units is in the range of not less than 0.5 to less than 7, are further higher in oxygen index than the polycarbonate resin compositions containing the silicone resins in Examples 1-3 and in Comparative Examples 1-7. The flame retardant resin compositions of Examples 4 and 5 are further higher in flame retardancy than Examples 1-3 and Comparative Examples 1-7.

From Examples 6-9, it is understood that the polycarbonate resin compositions containing the silicone resins "11", "12", "13" in Examples 6-9, where a mol ratio of phenyl group to methyl group in R is in the range of not less than 40% to less than 80%, are further higher in oxygen index than the polycarbonate resin compositions containing the silicone resins in Examples 1-5 and in Comparative Examples 1-7. The flame retardant resin compositions of Examples 6-9 are further higher in flame retardancy than Examples 1-5 and Comparative Examples 1-7. The following Table 5 shows dependency of the oxygen index upon the mol ratio of T-units to D-units and the mol ratio of phenyl to methyl in R.

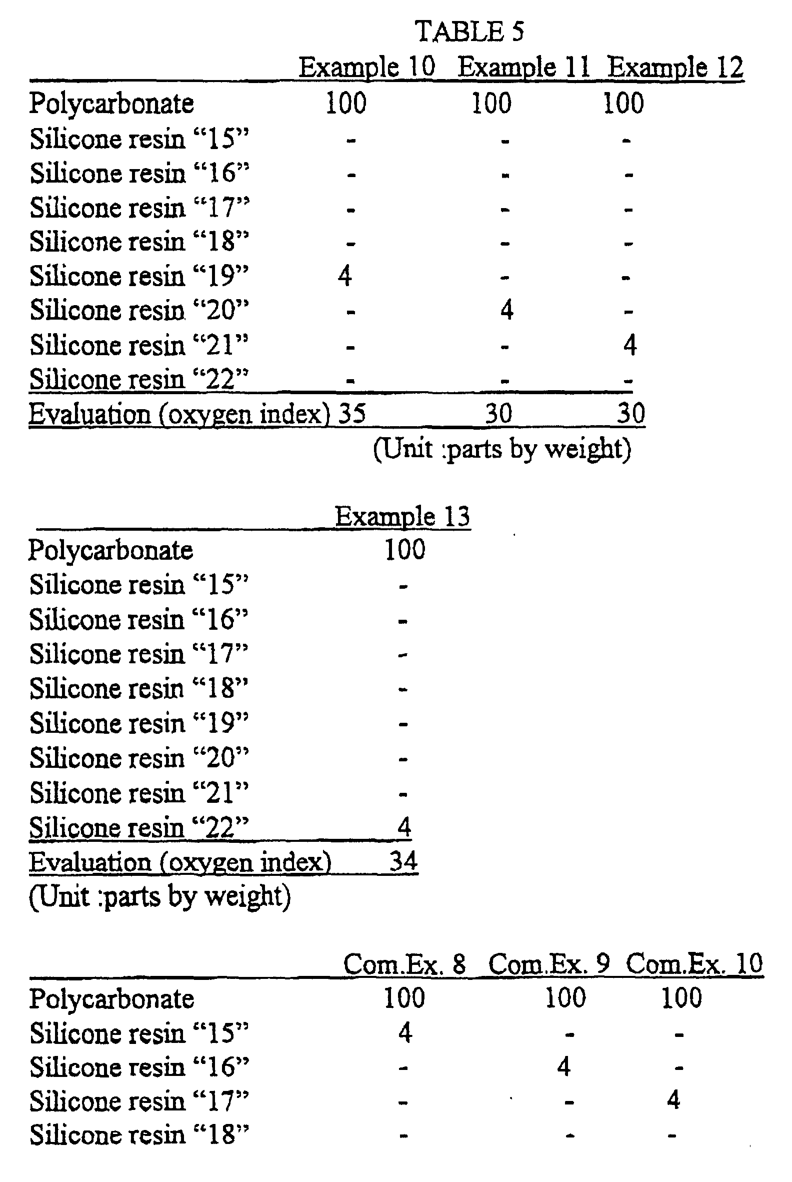

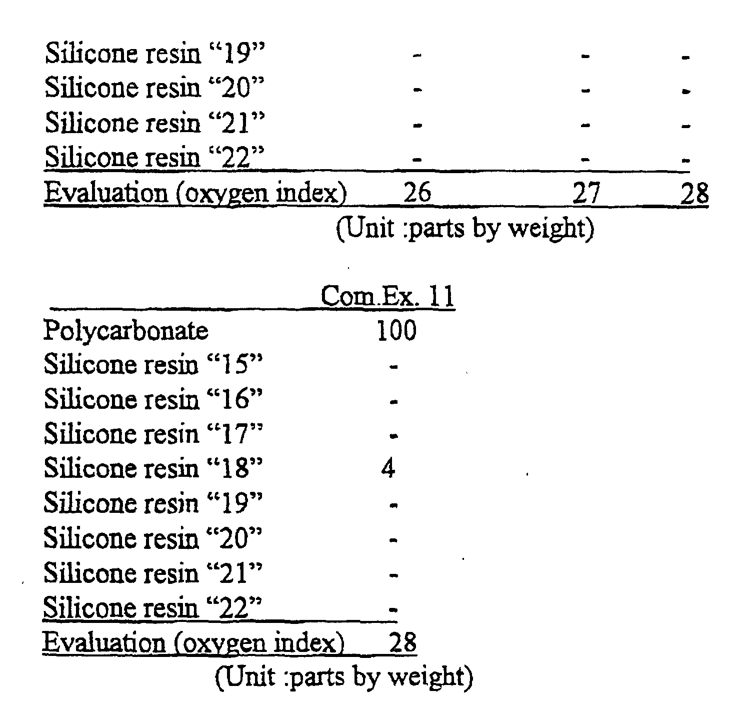

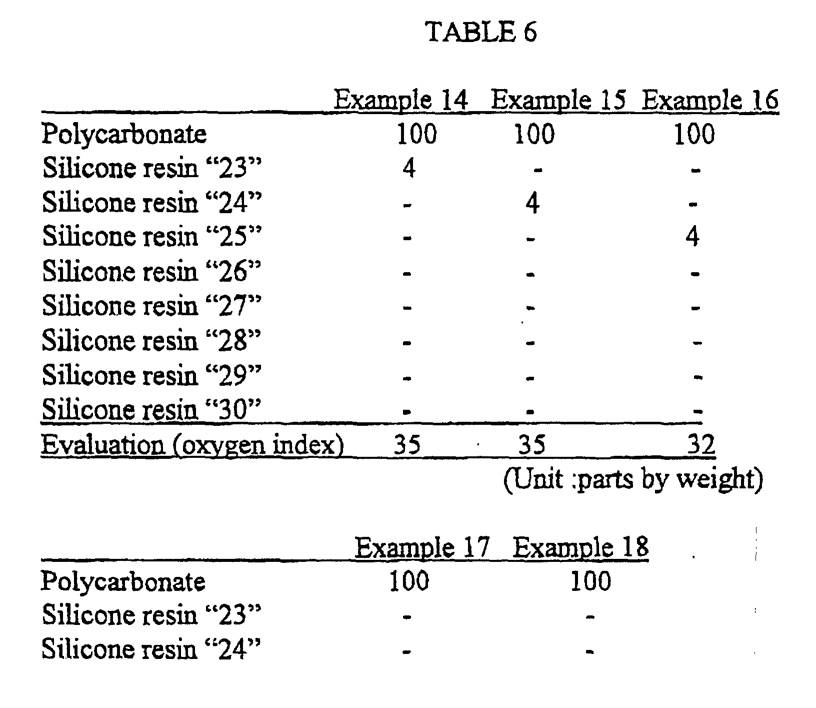

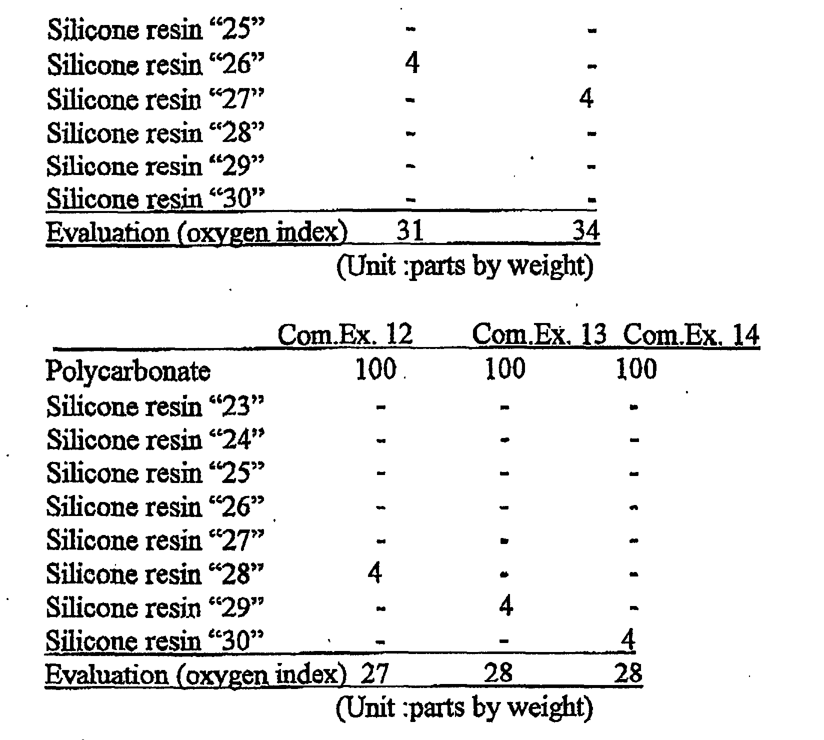

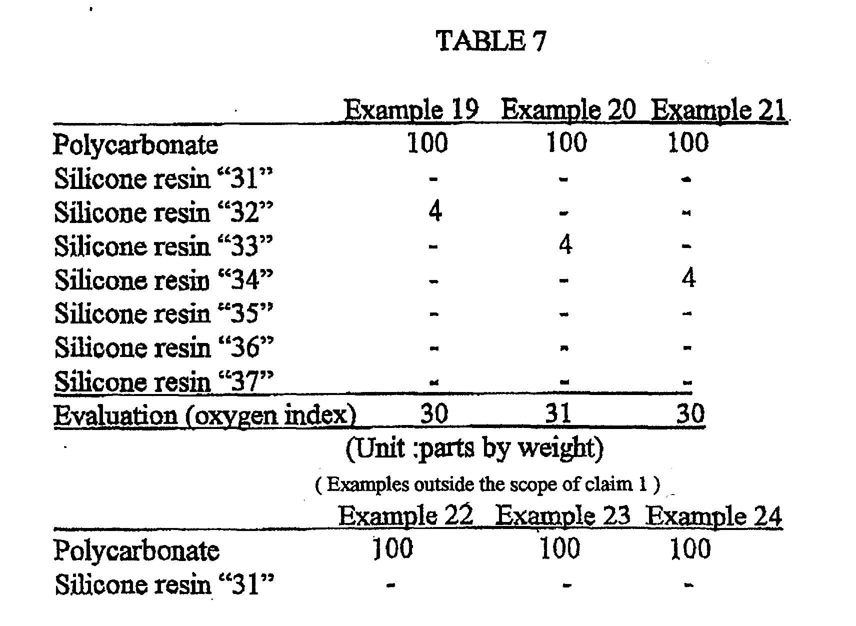

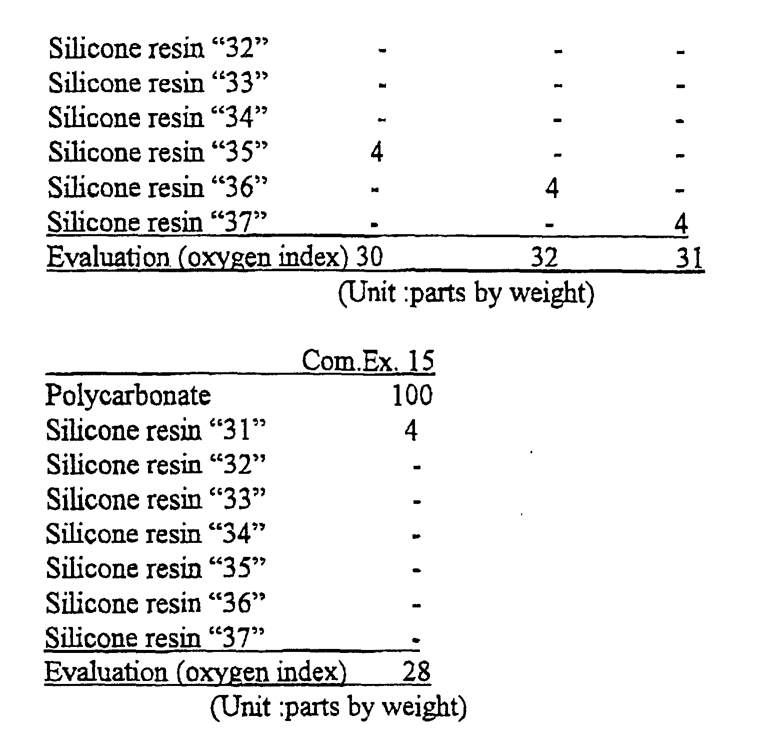

On Tables 5 and 6, Comparative Examples 8-14 and Examples 10-18 as well as FIG. 1 show the oxygen indexes when the polycarbonate resin is added with 4phr of silicone resins varying in the weight-average molecular weight and a mol ratio of phenyl in R.

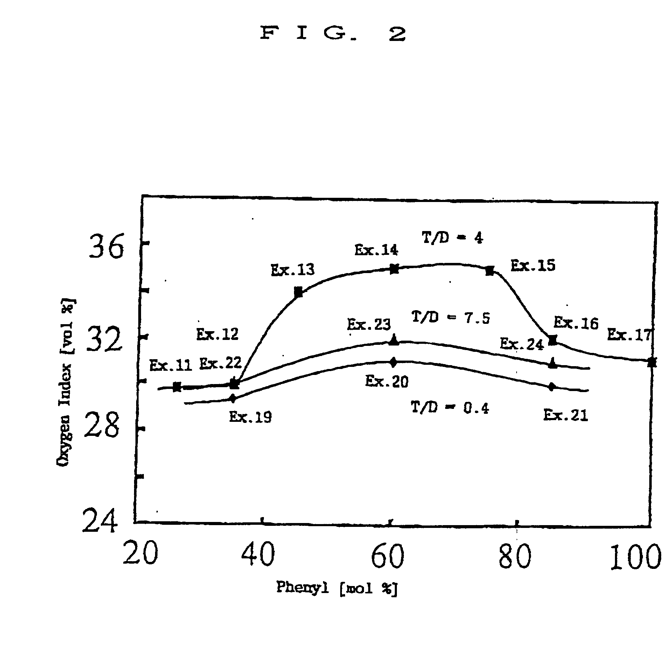

On Tables 5 through 7, Examples 11-17 as well as FIG. 2 show the oxygen indexes when the polycarbonate resin is added with 4phr of silicone resins varying in the T-unit to D-unit ratio and a mol ratio of phenyl in R.

On Tables 5 through 7, Comparative Examples 8, 10, 13, 15 and Examples 10, 14, 18 show the oxygen indexes when the polycarbonate resin is added with 4phr of silicone resins varying in the weight-average molecular weight.

FIG. 1 is a graph which shows the oxygen indexes when the polycarbonate resin is added with 4phr of silicone resins varying in the weight-average molecular weight and a mol ratio of phenyl in R.

FIG. 2 is a graph which shows the oxygen indexes when the polycarbonate resin is added with 4phr of silicone resins varying in the T-unit to D-unit ratio and a mol ratio of phenyl in R.

From Tables 5-7 and FIGS. 1 an 2, it is understood that the silicone resins are capable of remarkably increasing the flame resistance of the polycarbonate including aromatic ring, wherein the silicone resins have a mol ratio of T-units to D-units in the range of not less than 0.5 to less than 7 and also have a weight-average molecular weight in the range of not less than 10000 to not more than 270,000, where a mol ratio of phenyl group to methyl group in R is in the range of not less than 40% to less than 80%.

Influence of the terminal group in the silicone resin will be described.

In synthesizing the silicone resin, compounding amounts of trimethylmethoxy-silane, methyl-trimethoxy-silane, vinyl-trimethoxy-silane, and triphenyl-methoxy-silane were adjusted before all of the silane added were reacted with the silicone resin to synthesize eleven kinds of silicone resins differing in terminal functional group (M-unit). The silicone resin was added at 4phr to the polycarbonate resin.

The following Table 8 shows dependency of the oxygen index and dripping upon various kinds of silane added. The evaluation on dripping was carried out in the following manners. Pellets of polycarbonate resins added with the silicone resins were used to form sample pieces having a thickness of 3.0 mm by compression method at 270°C. The sample pieces are cut to a size of 125±5mm in length and 13.0±0.5mm in width. In accordance with 20mm vertical combustion test (UL94V) defined by Underwriters Laboratories, the dripping probability after applying flame for 10 seconds was evaluated. All of the silicone resins on table 8 have a weight-average molecular weight of 40,000 and a T-units to D-units mol ratio of 4:1 as well as a phenyl-to-methyl mol ratio of 60:40.

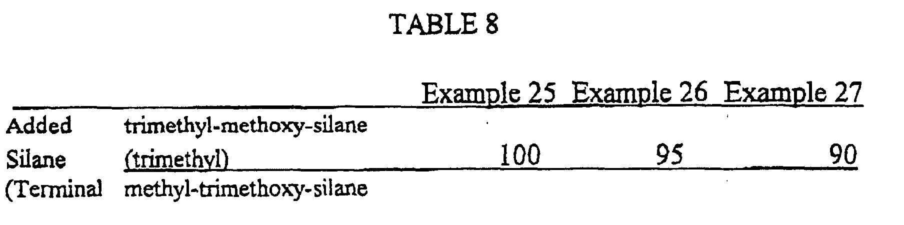

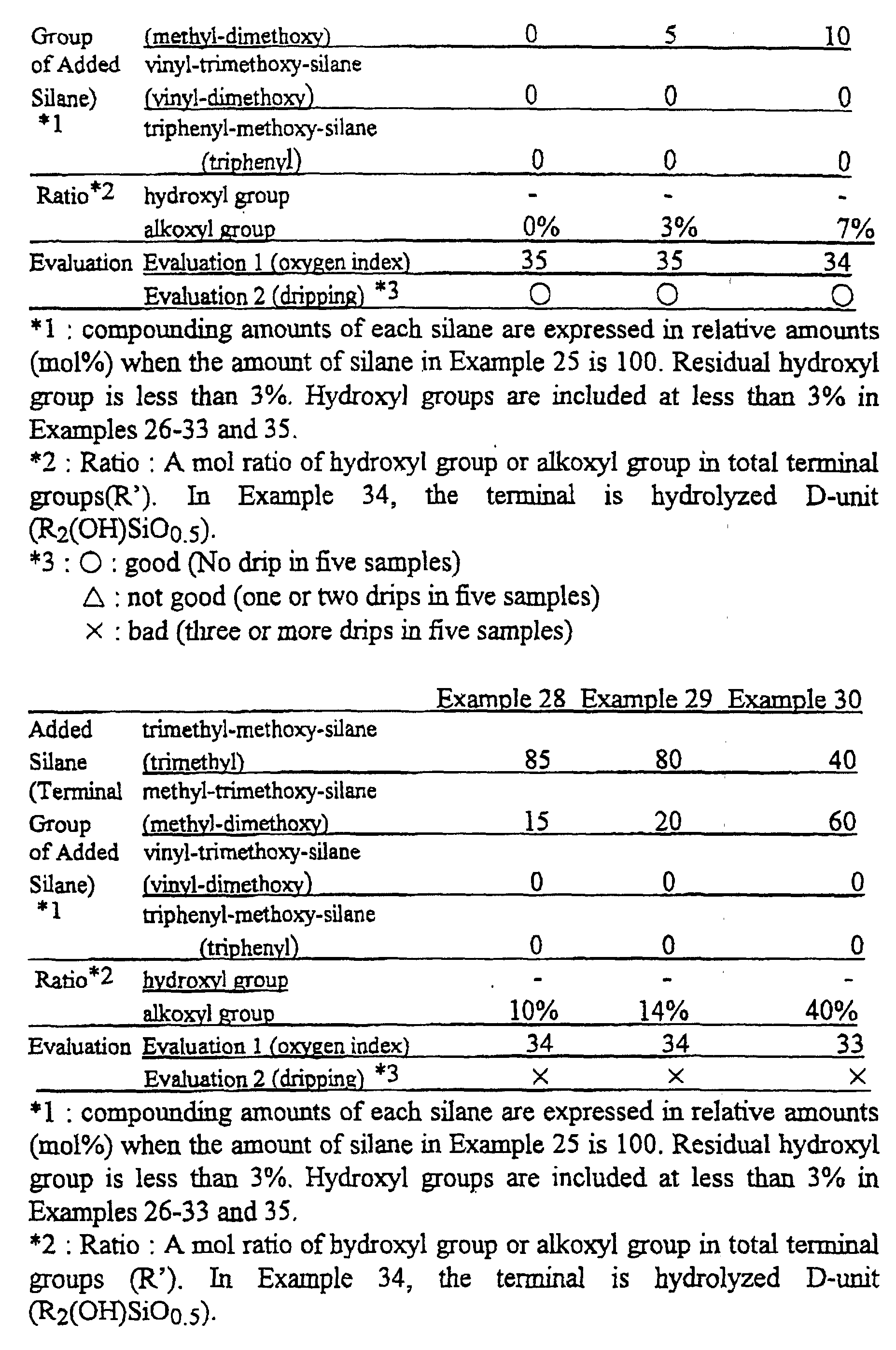

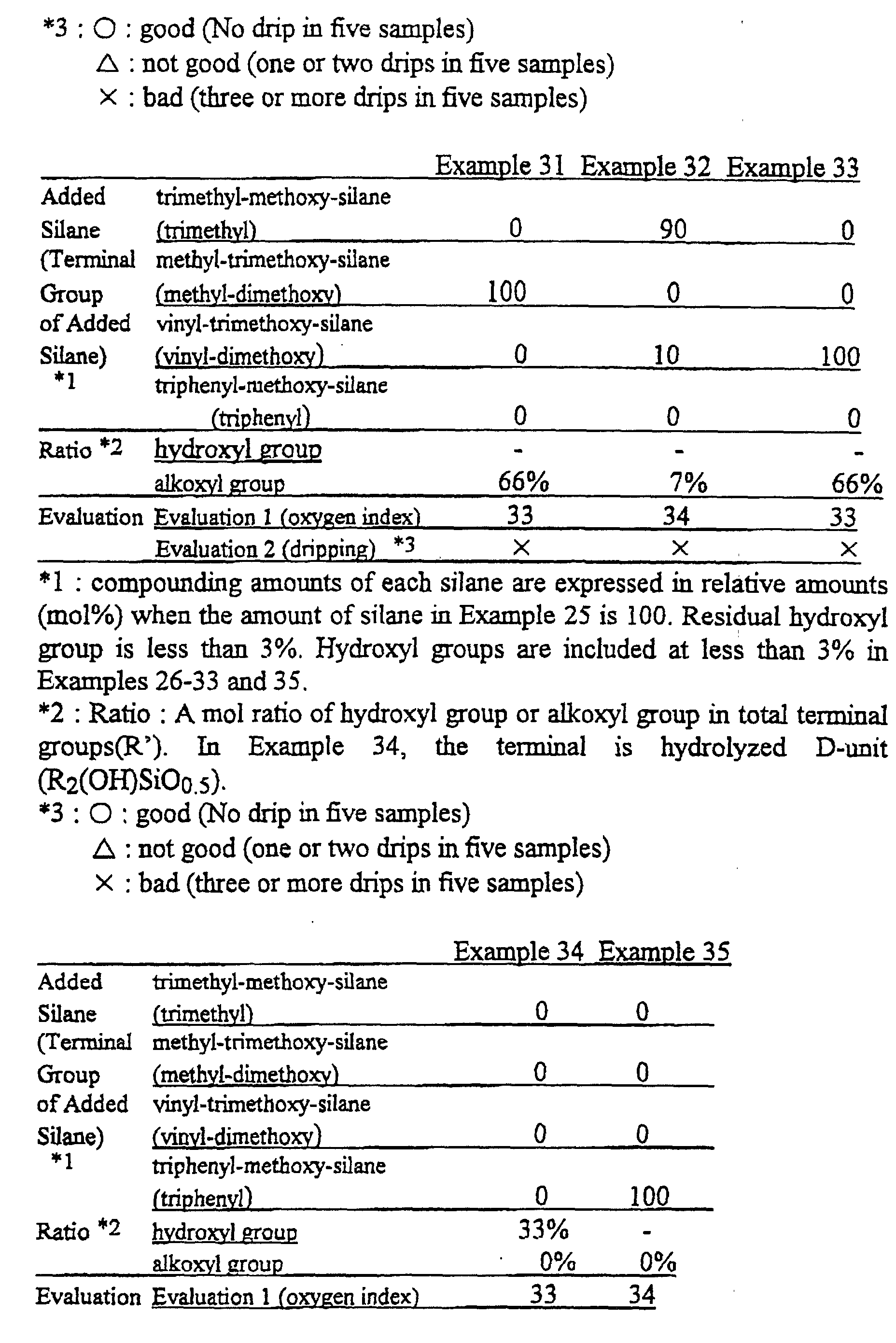

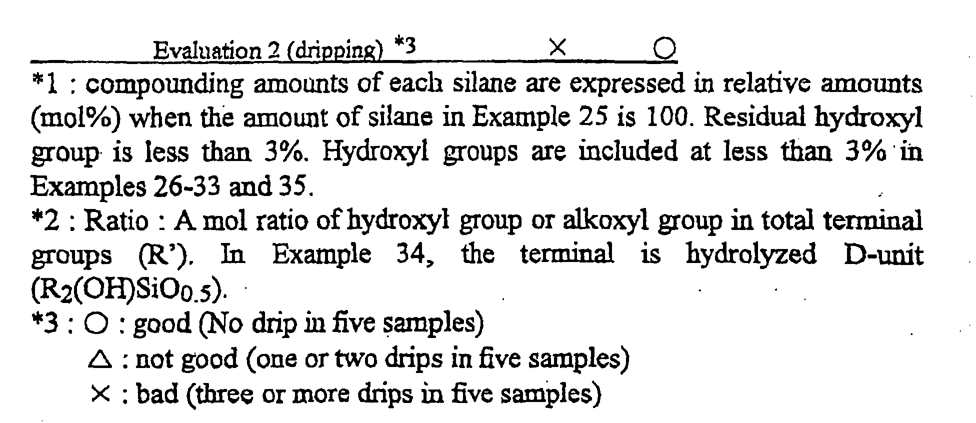

From Examples 25-35, it is understood that the silicone resins of Examples 25-27, and 35 comprise D-units (R₂SiO_{1.0}), T-units (RSiO_{1.5}), and M-unit (R'₃SiO_{0.5}) and also have a weight-average molecular weight in the range of not less than 10,000 to not more than 270,000, where R comprises phenyl group and methyl group and where hydroxyl group and/or methoxy group in R' are in the range of less than 10% by mol ratio and the remaining are methyl group and/or phenyl group, and the polycarbonate resin compositions including those silicone resins are higher in flame retardancy than and remarkably improved in anti-dripping rather than the polycarbonate resin compositions including the silicone resins free of the above characteristics in Examples 28-34.

The following Table 9 shows dependency of the oxygen index when PC/ABS is used.

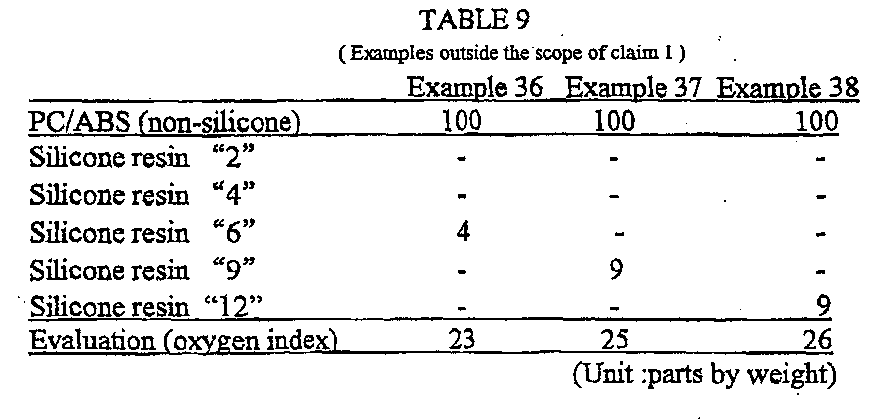

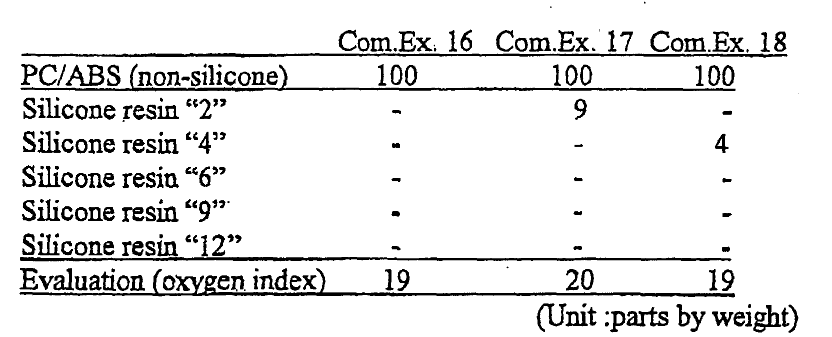

From Examples 36-38 and Comparative Examples 16-18, it is understood that the PC/ABS compositions of Examples 36-38 contain the silicone resins (6, 9, 12) which have both R₂SiO_{1.0} unit (D-unit) and RSiO_{1.5} unit (T-unit) and also have a weight-average molecular weight in the range of not less than 10,000 to not more than 270,000, and where R is hydrocarbon group. The PC/ABS compositions of Examples 36-38 are higher in oxygen index than the PC/ABS compositions containing the silicone resins (2, 4) in Comparative Examples 17-18, and PC/ABS composition free of silicone resin in Comparative Example 16. The flame retardant resin compositions of Examples 36-38 are higher in flame retardancy than Comparative Examples 16-18.

The following Table 10 shows dependency of the oxygen index when polystyrene resin is used.

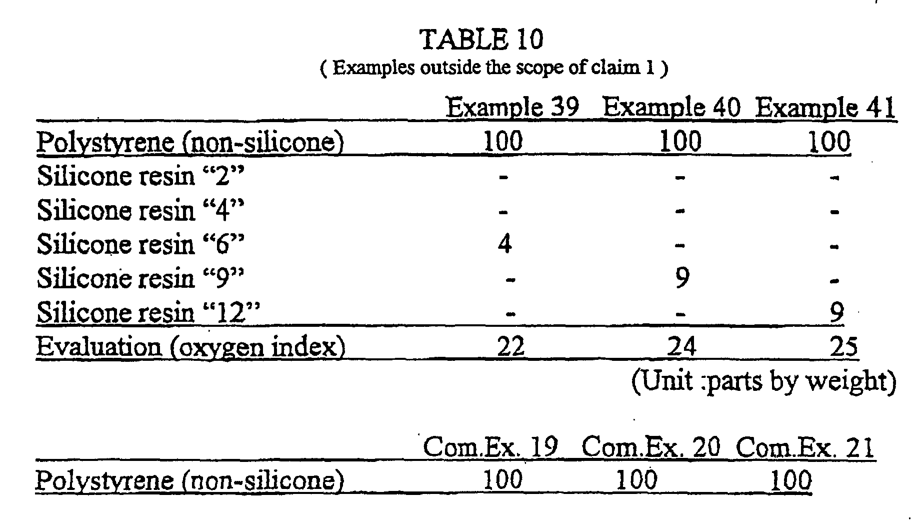

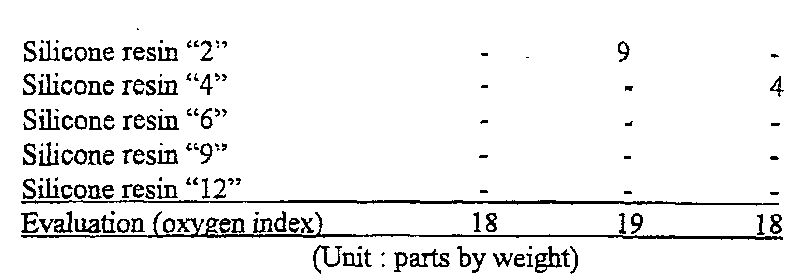

From Examples 39-41 and Comparative Examples 19-21, it is understood that the polystyrene resin compositions of Examples 39-41 contain the silicone resins (6, 9, 12) which have both R₂SiO_{1.0} unit (D-unit) and RSiO_{1.5} unit (T-unit) and also have a weight-average molecular weight in the range of not less than 10,000 to not more than 270,000, and where R is a hydrocarbon group. The polystyrene resin compositions of Examples 39-41 would be higher in oxygen index than the polystyrene resin compositions containing the silicone resins free of those characteristics in Comparative Examples 20-21, and polystyrene resin compositions free of silicone resin in Comparative Example 19. The flame retardant resin compositions of Examples 39-41 are higher in flame retardancy than Comparative Examples 19-21.

Tables 11 and 12 show results of co-use the silicone resins (6, 9, 11) with silica powder to improve the mixability, even the silicone resins (6, 9, 11) are low in the weight-average molecular weight and have a high mol ratio of D-units and then have somewhat problem in poor mixability.

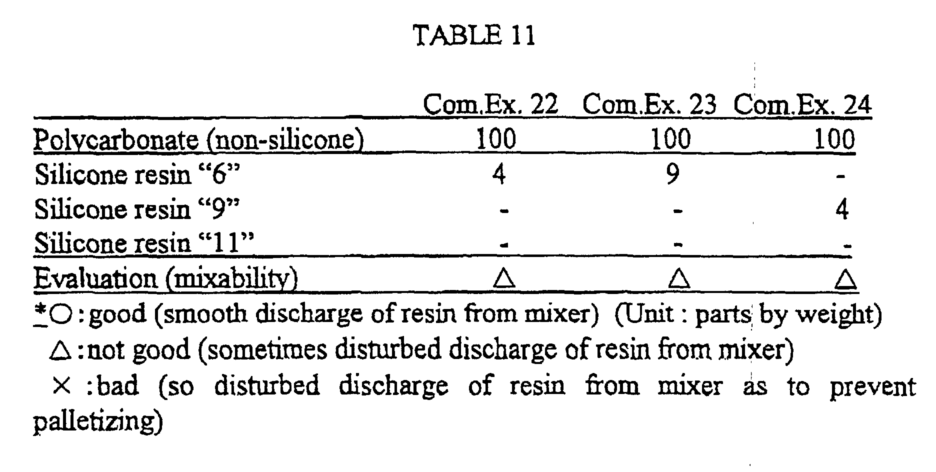

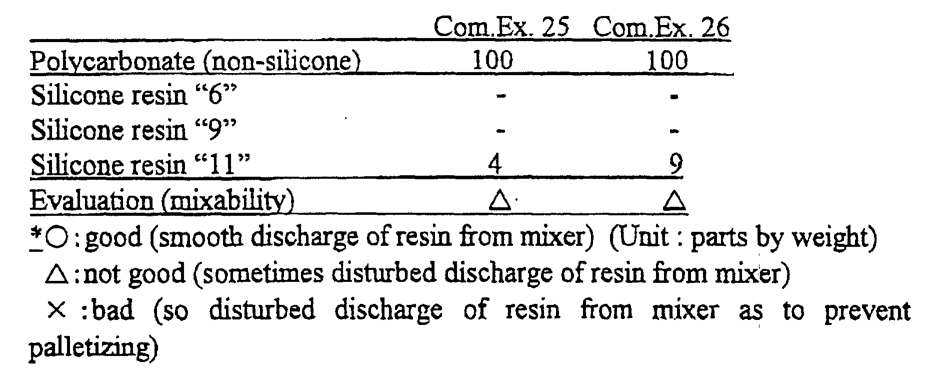

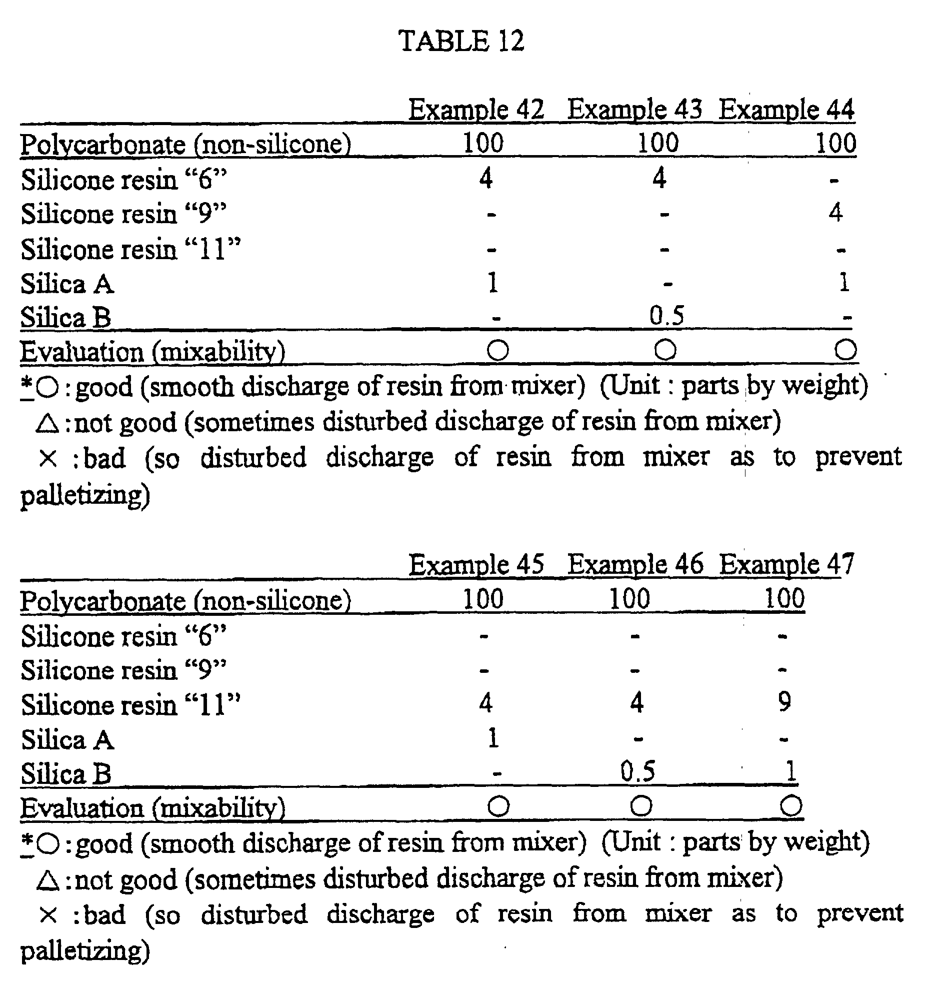

From Examples 42-47 and Comparative Examples 22-26, it is understood that the mixability was improved by co-use of the silicone resins (6, 9, 11) having problems in mixability and inorganic fillers such as silica powders. It is preferable that the amount of silica to be added is not less than 0.1 times and an average diameter is in the range of not less than 10 nanometers to not more than 30 micrometers. If the average diameter is larger than 30 micrometers, then the flame retardancy is lowered. If, however, the average diameter is smaller than 10 nanometers, then the problem in danger in operation is raised.

The foregoing examples have shown that the flame retardant resin composition is remarkably improved in flame retardancy, which comprises a silicone resin having both R₂SiO_{1.0} units and RSiO_{1.5} units and a non-silicone resin having aromatic ring, wherein a weight-average molecular weight of the silicone resin is not less than 10,000 to not more than 270,000 and also R is hydrocarbon group, especially a mixture of phenyl and methyl.

In the safety standard (UL94) in the combustion test determined by Underwriters Laboratories, the flame retardant resin compositions have sufficient flame retardancy compared with the conventional flame retardant resin compositions.

The above improvement in flame retardancy of the flame retardant resin composition allows a reduction in amount of silicone resin composition to be added and also the resin composition is improved in properties such as moldability and mechanical strength.

The above improvement in flame retardancy of the flame retardant resin composition further allows the resin composition to be burnable with no generation of harmful gas provided no further flame retarder containing halogen compounds, combinations of halogen compounds with antimony oxide and/or phosphorus compounds is added. The flame retardant resin composition is sufficiently safe and provides less damaging to environment.

It is possible to use the above flame retardant resin composition together with other flame retarders to obtain a synergistic effect of high flame retardancy. Notwithstanding, it is also possible to largely reduce the amount in use of the silicone resin and other flame retarder.

Modifications of the present invention will be apparent to a person having ordinary skill in the art, to which the invention pertains, and it is to be understood that the embodiments as shown and described by way of illustration are by no means intended to be considered in a limiting sense. Accordingly, it is intended to cover by the claims all modifications which fall within the scope thereof.

## Claims

1. Flame retardant resin composition comprising a silicone resin and a non-silicone resin, wherein
said non-silicone resin is aromatic polycarbonate resin,
said silicone resin has R₂SiO_{1.0} units, RSiO_{1.5} units and R'₃SiO_{0.5} units,
the average molecular weight of said silicone resin is in the range from not less than 10,000 to not more than 270,000,
R is a hydrocarbon group,
R' is a mixture of at least a first one selected from the group consisting of a saturated hydrocarbon group and an aromatic hydrocarbon group with at least a second one selected from the group consisting of a hydroxyl group and an alkoxyl group,
and the mol ratio of the RSiO_{1.5} units to the R₂SiO_{1.0} units in said silicone resin is in the range from 0.5 to less than 7,
wherein said resin composition does not contain any flame-retardant agent having a halogen compound or a phosphorus compound.

2. The flame retardant resin composition as claimed in claim 1, **characterized in that**, in R' of said silicone resin, said at least second one selected from the group consisting of said hydroxyl group and said alkoxyl group is less than 10% and the remaining is said at least first one selected from the group consisting of said saturated hydrocarbon group and said aromatic hydrocarbon group.

3. The flame retardant resin composition as claimed in claim 1, **characterized in that** an inorganic filler is included as a reinforcing agent.

4. The flame retardant resin composition as claimed in claim 3, **characterized in that** said inorganic filler comprises silica powder, or calcium carbonate powder, or talc powder.

## Patentansprüche

1. Flammhemmende Harzzusammensetzung, die ein Silikonharz und ein Nicht-Silikonharz umfasst, wobei
das Nicht-Silikonharz ein aromatisches Polycarbonatharz ist,
das Silikonharz R₂SiO_{1,0}-Einheiten, RSiO_{1,5}-Einheiten und R'₃SiO_{0,5}-Einheiten aufweist,
das durchschnittliche Molekulargewicht des Silikonharzes im Bereich von nicht weniger als 10.000 bis nicht mehr als 270.000 liegt,
R eine Kohlenwasserstoffgruppe ist,
R' eine Mischung von mindestens einem ersten Bestandteil ausgewählt aus der Gruppe bestehend aus einer gesättigten Kohlenwasserstoffgruppe und einer aromatischen Kohlenwasserstoffgruppe mit mindestens einem zweiten Bestandteil, ausgewählt aus der Gruppe bestehend aus einer Hydroxylgruppe und einer Alkoxylgruppe ist,
und das Molverhältnis der RSiO_{1,5}-Einheiten zu den R₂SiO_{1,0}-Einheiten im Silikonharz im Bereich von 0,5 bis weniger als 7 liegt,
wobei die Harzzusammensetzung kein Flammschutzmittel enthält, das eine Halogenverbindung oder eine Phosphorverbindung aufweist.

2. Die flammhemmende Harzzusammensetzung, wie beansprucht in Anspruch 1,
**dadurch gekennzeichnet, dass** in R' des Silikonharzes der mindestens eine zweite Bestandteil, ausgewählt aus der Gruppe bestehend aus der Hydroxylgruppe und der Alkoxylgruppe, weniger als 10% beträgt und der Rest der mindestens eine erste Bestandteil, ausgewählt aus der Gruppe bestehend aus der gesättigten Kohlenwasserstoffgruppe und der aromatischen Kohlenwasserstoffgruppe ist.

3. Die flammhemmende Harzzusammensetzung, wie beansprucht in Anspruch 1,
**dadurch gekennzeichnet, dass** ein anorganischer Füllstoff als Verstärkungsmittel enthalten ist.

4. Die flammhemmende Harzzusammensetzung, wie beansprucht in Anspruch 3,
**dadurch gekennzeichnet, dass** der anorganische Füllstoff Siliciumoxydpulver oder Calciumcarbonatpulver oder Talkumpulver umfasst.

## Revendications

1. Composition de résine ignifuge comprenant une résine de silicone et une résine non siliconée, dans laquelle
ladite résine non siliconée est une résine de polycarbonate aromatique,
ladite résine de silicone contient des motifs R₂SiO_{1,0}, des motifs RSiO_{1,5} et des motifs R'₃SiO_{0,5},
la masse moléculaire moyenne de ladite résine de silicone est dans la gamme de pas moins de 10 000 à pas plus de 270 000,
R est un groupe hydrocarboné,
R' est un mélange d'au moins un premier radical choisi dans le groupe constitué d'un groupe hydrocarboné saturé et d'un groupe hydrocarboné aromatique avec au moins une deuxième radical choisi dans le groupe constitué d'un groupe hydroxyle et d'un groupe alcoxyle,
et le rapport molaire des motifs RSiO_{1,5} aux motifs R₂SiO_{1,0} dans ladite résine de silicone est dans la gamme de 0,5 à moins de 7,
dans laquelle ladite composition de résine ne contient aucun agent ignifuge contenant un composé halogéné ou un composé phosphoré.

2. Composition de résine ignifuge selon la revendication 1, **caractérisée en ce que**, dans R' de ladite résine de silicone, ledit au moins deuxième radical choisi dans le groupe constitué dudit groupe hydroxyle et dudit groupe alcoxyle représente moins de 10 % et le reste est constitué par ledit au moins premier radical choisi dans le groupe constitué dudit groupe hydrocarboné saturé et dudit groupe hydrocarboné aromatique.

3. Composition de résine ignifuge selon la revendication 1, **caractérisée en ce qu'**une charge minérale est incorporée comme agent de renfort.

4. Composition de résine ignifuge selon la revendication 3, **caractérisée en ce que** ladite charge minérale comprend de la poudre de silice, ou de la poudre de carbonate de calcium ou de la poudre de talc.
